# EUROPEAN PATENT APPLICATION

(11) **EP 4 502 584 A1**
(43) Date of publication of application: **05.02.2025**
(21) Application number: 24192975.1
(22) Date of filing: 05.08.2024
(51) Int. Cl.: G01N 27/12, G01N 27/416

(54) **GAS-SENSING ELEMENTS AND A METHOD OF MANUFACTURING THEREOF**

(30) Priority: 04.08.2023 US 202363517872 P
(71) Applicant: Carrier Corporation, Palm Beach Gardens, FL 33418 (US)
(72) Inventor: EVJU, Jon, Minneapolis, 55438 (US)
(74) Representative: Dehns

(57) **Abstract**

A gas-sensing element for a gas sensor and a method of manufacturing thereof are disclosed. The gas-sensing element comprises a base having a metal oxide semiconductor formed of a first metal. Further, the gas-sensing element comprises a gas-sensing surface disposed on the base. The gas-sensing surface comprises a metal oxide semiconductor formed of the first metal and at least one dopant having at least one of a second metal and at least one compound. Further, the gas-sensing element comprises at least one inert conducting element disposed between the base and the gas-sensing surface. The at least one inert conducting element is adapted to maintain a predefined minimum conductivity of the gas-sensing element.

## Description

### FIELD OF THE INVENTION

The disclosure relates to gas sensors and more particularly, to gas-sensing elements and a method of manufacturing thereof.

### BACKGROUND

Gas sensors have been used in various applications such as process monitoring and control and safety monitoring. Generally, gas sensors are employed to detect the presence of gaseous compounds in an environment. Such gaseous compounds can also be flammable or explosive in nature. The gas sensors have also been used for leak detection where such gaseous compounds are used or manufactured. Usually, the gas sensors, such as MOS sensors, rely on the interaction between gaseous compounds, such as hydrogen sulfide or hydrocarbons, with adsorbed oxygen on a metal oxide semiconductor surface of such sensors.

With the prolonged use of such gas sensors, it is important to be able to determine when a sensor becomes ineffective and loses its ability to detect gaseous compounds. Generally, the conductivity of the sensor varies based on the presence of the gaseous compound in its surroundings. For instance, in the presence of gaseous compounds, the conductivity of the sensor may be substantially higher compared to the conductivity of the sensor in the absence of the gaseous compound. There is a considerable difference between the conductivity of the sensor in the absence of the gaseous compound and in the presence of the gaseous compound. The conductivity of the sensor in the absence of the gaseous compound is substantially low as it becomes difficult to determine the integrity of such a sensor. Therefore, it is desirable to design the sensor in a manner that the integrity of such sensor can be determined accurately irrespective of the presence or absence of gaseous compounds.

### SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

According to a first aspect of the invention, there is provided a gas-sensing element for a gas sensor. The gas-sensing element comprises a base having a metal oxide semiconductor formed of a first metal. Further, the gas-sensing element comprises a gas-sensing surface disposed on the base. The gas-sensing surface comprises a metal oxide semiconductor formed of the first metal and at least one dopant having at least one of a second metal and at least one compound. Further, the gas-sensing element comprises at least one inert conducting element disposed between the base and the gas-sensing surface. The at least one inert conducting element is adapted to maintain a predefined minimum conductivity of the gas-sensing element.

Optionally, the predefined minimum conductivity is tunable corresponding to a series resistance of the gas sensor and tunable in at least one of 1E-5 mS to 1E-3 mS, 1E-4 mS to 1E-2 mS, 1E-3 mS to 1E-1 mS, and 1E-2 mS to 1 mS ranges.

Optionally, the at least one inert conducting element is adapted to maintain the predefined minimum conductivity of the gas-sensing element based on conductivity of the at least one inert conducting element, and wherein the conductivity of the at least one inert conducting element is varied based on at least one of a geometric pattern of material deposition of the at least one inert conducting element, a thickness of material deposition of the at least one inert conducting element, a width of material deposition of the at least one inert conducting element, a thickness of the base underneath the at least one inert conducting element, and an overlapping area between the material deposition of the at least one inert conducting element, the base, and electrodes of the gas sensor.

Optionally, the conductivity of the at least one inert conducting element is higher in presence of the gas than in the absence of the gas, wherein the conductivity of the at least one inert conducting element is constant in the absence of gas.

Optionally, the conductivity of the at least one inert conducting element is proportional to the thickness of material deposition of the at least one inert conducting element.

Optionally, the at least one inert conducting element is embodied as a non-continuous film having an average thickness in a range of 0.1 nm to 9 nm.

Optionally, the at least one inert conducting element is embodied as a continuous film having an average thickness in a range of 5 nm to 15 nm.

Optionally, the at least one inert conducting element is embodied as a continuous film having an average thickness in a range of 20 nm to 50 nm.

Optionally, the at least one inert conducting element has a serpentine pattern.

Optionally, the at least one inert conducting element has an island pattern.

Optionally, the at least one inert conducting element has a planar geometric shape.

Optionally, the at least one inert conducting element has a double spiral pattern.

Optionally, the at least one inert conducting element is formed of a nonreactive conductive material.

Optionally, the first metal comprises aluminum, bismuth, cadmium, cerium, chromium, cobalt, copper, iron, gallium, indium, molybdenum, niobium, tantalum, tin, titanium, tungsten, vanadium, or zinc.

Optionally, the first metal comprises aluminum, bismuth, cadmium, cerium, chromium, cobalt, copper, iron, gallium, indium, molybdenum, niobium, tantalum, tin, titanium, tungsten, vanadium, or zinc, and the second metal comprises one or more group 5 to group 11 transition metals.

Optionally, the at least one inert conducting element is adapted to maintain the predefined minimum conductivity of the gas-sensing element to evaluate an operational integrity of the gas-sensing surface in at least one of absence and presence of a gas to be tested.

Optionally, the gas is embodied as one of hydrogen and hydrogen sulfide.

According to a second aspect of the invention, there is provided a gas sensor. The gas sensor comprises a substrate and a gas-sensing element disposed on the substrate. The gas-sensing element comprises a base comprising a metal oxide semiconductor formed of a first metal. Further, the gas-sensing element comprises a gas-sensing surface disposed on the base. The gas-sensing surface comprises a metal oxide semiconductor formed of the first metal and a dopant having a second metal. The gas-sensing element comprises at least one inert conducting element disposed between the base and the gas-sensing surface. The at least one inert conducting element is adapted to maintain a predefined minimum conductivity of the gas-sensing element. Further, the gas sensor comprises a plurality of electrodes connected to the gas-sensing element and an electrical circuit. The electrical circuit is adapted to measure at least one of a voltage across the gas-sensing element, resistance, impedance, current, and conductance associated with the gas-sensing element and the at least one conducting element.

According to a third aspect of the invention, there is provided a method of manufacturing a gas-sensing element. The method comprises disposing a base comprising a metal oxide semiconductor formed of a first metal. Further, the method comprises disposing a gas-sensing surface having a metal oxide semiconductor on the base. The metal oxide semiconductor is formed of the first metal and at least one dopant having at least one of a second metal and at least one compound. The method comprises disposing at least one inert conducting element between the base and the gas-sensing surface. The at least one inert conducting element is adapted to maintain a predefined minimum conductivity of the gas-sensing element.

To further clarify the advantages and features of the methods, systems, and apparatuses/devices, a more particular description of the methods, systems, and apparatuses/devices will be rendered by reference to specific embodiments thereof, which are illustrated in the appended drawings. It is appreciated that these drawings depict only typical embodiments of the disclosure and are therefore not to be considered limiting of its scope. The disclosure will be described and explained with additional specificity and detail with the accompanying drawings.

### BRIEF DESCRIPTION OF THE DRAWINGS

These and other features, aspects, and advantages of the invention will become better understood when the following detailed description is read with reference to the accompanying drawings in which like characters represent like parts throughout the drawings, wherein:
Figure 1 illustrates a schematic view of a gas sensor having a gas-sensing element;
Figure 2 illustrates a schematic view of the gas-sensing element;
Figures 3a-3d illustrate different types of inert conducting elements of the gas-sensing element; and
Figure 4 illustrates a flowchart depicting a method of manufacturing the gas-sensing element.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION OF FIGURES

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system and device, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the disclosure will be described below in detail with reference to the accompanying drawings.

Usually, the gas sensors, such as MOS sensors, rely on the interaction between gaseous compounds, such as hydrogen sulfide or hydrocarbons, with adsorbed oxygen on a metal oxide semiconductor surface of such sensors. The electrical conductivity of such gas sensors varies based on the presence of the gaseous compounds, such as reducing gases, near a sensing surface of the gas sensors. Although, the electrical conductivity of the gas sensors is substantially low in the absence of the gaseous compounds, and therefore it usually becomes difficult to determine whether such gas sensors are operational or whether their operational integrity is compromised.

The disclosure provides a gas-sensing element with an inert conducting element for a gas sensor to maintain a predefined minimum conductivity of the gas-sensing element. In particular, the inert conducting element maintains a measurable level of the predefined minimum conductivity of the gas-sensing element even in the absence of the gaseous compounds. A variation in the predefined minimum conductivity, in absence of the gaseous compounds, indicates that integrity of a gas-sensing surface of the gas-sensing element is breached stemming from either cracking or peeling of such surface from the gas-sensing element. Therefore, the implementation of the inert conducting element helps in evaluating the operational integrity of the gas-sensing surface in at least one of absence and presence of a gas to be tested.

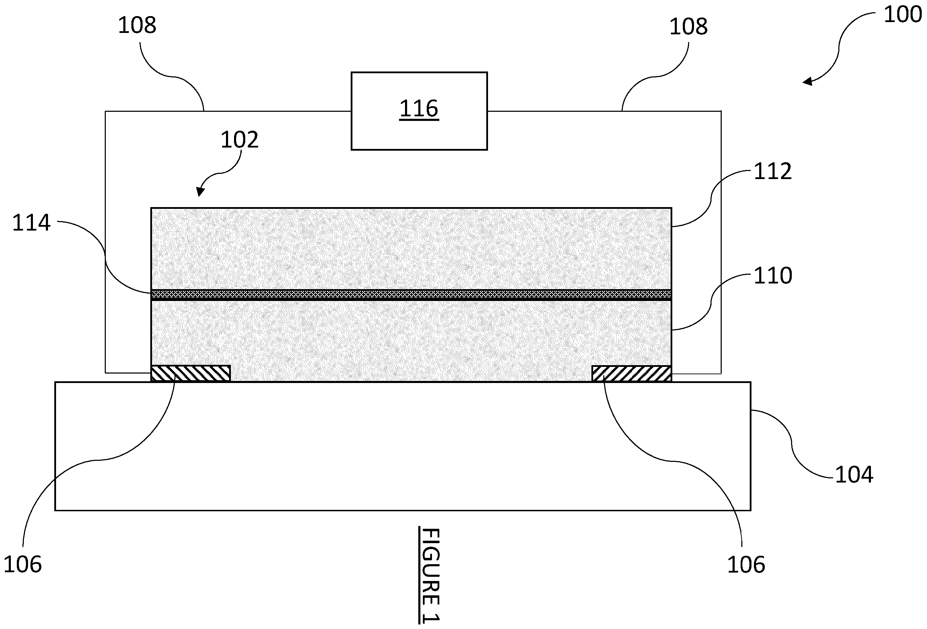

**Figure 1** illustrates a schematic view of a gas sensor 100 having a gas-sensing element 102, according to one or more embodiments of the disclosure. In one or more embodiments, the gas sensor 100 may be embodied as a Metal-Oxide-Semiconductor (MOS) sensor, without departing from the scope of the disclosure. In the illustrated embodiment, the gas sensor 100 may be, but is not limited to, a substrate 104, the gas-sensing element 102, a plurality of electrodes 106, and an electrical circuit 108.

Referring to Figure 1, the gas-sensing element 102 may be disposed on the substrate 104. In one or more embodiments, the gas-sensing element 102 may include, but is not limited to, a base 110, a gas-sensing surface 112, and at least one inert conducting element 114. The base 110 may include a metal oxide semiconductor formed of a first metal. In one or more embodiments, the first metal may include, but is not limited to, aluminum, bismuth, cadmium, cerium, chromium, cobalt, copper, iron, gallium, indium, molybdenum, niobium, tantalum, tin, titanium, tungsten, vanadium, or zinc. In one or more embodiments, the term 'first metal' may also be referred to metal mixtures, without departing from the scope of the disclosure.

The metal oxide semiconductors of the base 110 may be embodied as one of, but are not limited to, aluminum (III) oxide, bismuth (III) oxide, cadmium oxide, cerium (IV) oxide, chromium (III) oxide, cobalt (III) oxide, copper (II) oxide, iron (III) oxide, gallium (III) oxide, Indium (III) oxide, molybdenum (VI) oxide, niobium (V) oxide, nickel (II) oxide, tantalum (V) oxide, tin (IV) oxide, titanium (IV) oxide, tungsten (VI) oxide, vanadium (5) oxide, zinc (II) oxide, and mixtures of these. Mixed metal oxides (e.g., SnO2-CuO or other mixed oxides of the above metal oxides) can also be utilized to form the metal oxide semiconductors of the base 110.

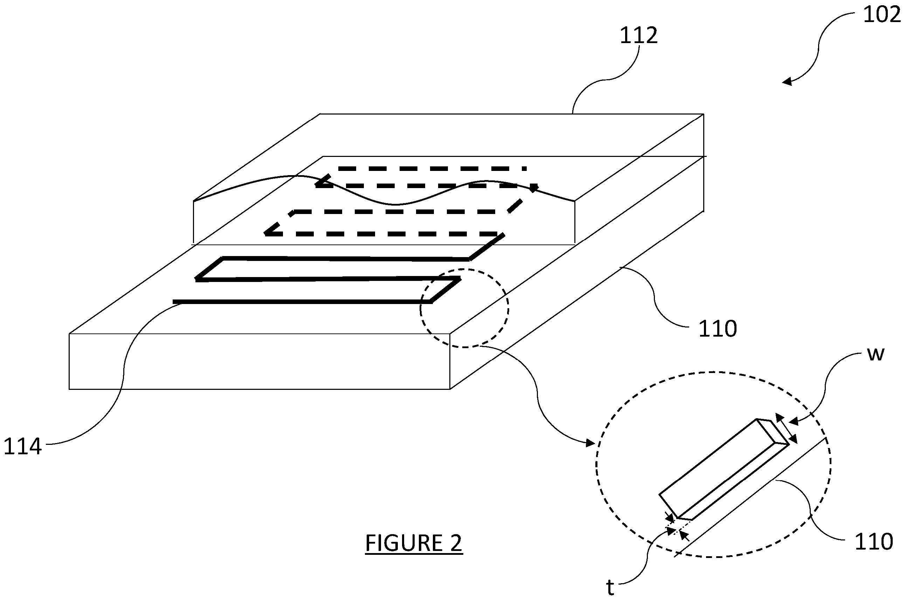

**Figure 2** illustrates a schematic view of the gas-sensing element 102, according to one or more embodiments of the disclosure. Referring to Figures 1 and 2, in the illustrated embodiment, the gas-sensing surface 112 of the gas-sensing element 102 may be disposed on the base 110. In one or more embodiments, the gas-sensing surface 112 may be deposited on the base 110 using electron beam deposition, ion beam deposition, or thermal deposition techniques such as sputtering, physical vapor deposition, chemical vapor deposition, or thermal spray, without departing from the scope of the disclosure.

The gas-sensing surface 112 may include, but is not limited to, a metal oxide semiconductor. In the absence of gases, the metal oxide semiconductor adsorbs atmospheric oxygen at the gas-sensing surface 112, and this adsorbed oxygen captures free electrons from the metal oxide semiconductor, resulting in a measurable level of base resistance of the semiconductor at a relatively high level. When the gas-sensing surface 112 is exposed to the gases, such gases interact with the adsorbed oxygen, causing the gas-sensing surface 112 to release free electrons back to the metal oxide semiconductor at the gas-sensing surface 112, resulting in a measurable decrease in resistance that can be correlated with a measured level of gas. In particular, a variation in the measurable level of electrical resistance or conductivity associated with the metal oxide semiconductor at the gas-sensing surface 112 indicates a level of gas sensed by the gas sensor 100. In one or more embodiments, the gas may be embodied as one of hydrogen and hydrogen sulfide, without departing from the scope of the disclosure.

In one or more embodiments, the metal oxide semiconductor of the gas-sensing surface 112 may be formed of the first metal and at least one dopant. The at least one dopant may interchangeably be referred to as the metal dopant, without departing from the scope of the disclosure. The metal dopant may be used to enhance the responsiveness of the metal oxide semiconductor to the gases, also referred to as target gases, being sensed for, such as hydrogen sulfide and hydrogen, and to allow for the target gas to be distinguished from other gases that may also produce a variation in the measurable level of electrical resistance or conductivity at the gas-sensing surface 112.

The at least one dopant may include, but is not limited to, at least one of a second metal and at least one compound, such as silver sulfide. The second metal may be different from the first metal. The second metal may include, but is not limited to, one or more group 5 to group 11 transition metals. Examples of transition metal dopants include copper, silver, gold, iron, ruthenium, nickel, platinum, palladium, or vanadium. Although any of the above materials can exhibit a change in electrical resistance or conductivity in response to exposure to various test gases, the use of some materials for particular applications has been more widespread than other materials. For example, copper-doped tin oxide can be used for hydrogen sulfide sensing elements and platinum and palladium doping is commonly used in sensing for hydrogen or hydrocarbons. Such combinations and others are included within this disclosure.

Various other materials can be included in the metal oxide semiconductor of the gas-sensing surface 112, including but not limited to noble metals (e.g., silver, gold). Dopants, metal oxide semiconductors, other materials, and combinations thereof are disclosed in Kaur, M. Aswal, D.K. and Yakhmi, J.V." Chemiresistor Gas Sensors: Materials, Mechanisms and Fabrication" Chapter 2 in , Science and Technology of Chemiresistor Gas Sensors, Ed. Aswal, D.K. and Gupta, S.K. Nova Science Publishers, New York, 2007., and in Bochenkov, V.E. and Sergeev, G.B. "Sensitivity, Selectivity, and Stability of Gas-Sensitive Metal-Oxide Nanostructures" Chapter 2, in Metal Oxide Nanostructures and Their Applications., American Scientific Publishers, California, 2010.

It should be understood that the metal oxide semiconductor may be doped with different dopants selected based on a target gas to be detected by the gas-sensing element 102. Further, in an alternative embodiment, the metal oxide semiconductor of the gas-sensing surface 112 may be formed without any dopants based on a target gas to be detected by the gas-sensing element 102. Therefore, it should be understood that the metal oxide semiconductor of the gas-sensing surface 112 may either be a doped or a non-doped semiconductor based on the target gas for which such gas-sensing element 112 is to be deployed., without departing from the scope of the disclosure.

As explained earlier, a level of conductivity of the gas-sensing surface 112 in the absence of the test gases may be substantially low relative to a level of conductivity of the gas-sensing surface 112 in the presence of test gases. Owing to such a significant difference between the conductivity levels, it might be difficult to determine whether the gas-sensing surface 112 is operational, in particular when such gas-sensing surface 112 is not interacting with any of the test gases. Therefore, in order to increase the overall conductivity of the gas-sensing surface 112, the at least one inert conducting element 114 may be disposed between the gas-sensing surface 112 and the base 110 of the gas sensor 100.

The at least one inert conducting element 114 may be adapted to maintain a desired conductivity which is measurable in the absence of the test gases and therefore it becomes easier to determine whether the gas-sensing surface 112 is operational even in the absence of the test gases. In particular, owing to implementation of the at least one inert conducting element 114, an operational integrity of the gas-sensing surface 112 may be tested in at least one of absence and presence of the gas. Constructional and operational details of the at least one inert conducting element 114 are explained in detail in the subsequent sections of the disclosure.

The gas-sensing element 102 may include the at least one inert conducting element 114. In one or more embodiments, the at least one inert conducting element 114 may interchangeably be referred to as the inert conducting element 114, without departing from the scope of the disclosure. As mentioned earlier, the inert conducting element 114 may be disposed between the base 110 and the gas-sensing surface 112. In one or more embodiments, the inert conducting element 114 may be deposited between the base 110 and the gas-sensing surface 112 using electron beam deposition, ion beam deposition, or thermal deposition techniques such as sputtering, physical vapor deposition, chemical vapor deposition, or thermal spray, without departing from the scope of the disclosure.

In one or more embodiments, the inert conducting element 114 may be formed of a nonreactive conductive material. In an example, the nonreactive conductive material may be embodied as a noble metal, without departing from the scope of the disclosure. In such an example, the nonreactive conductive material may be embodied as Gold (Au). However, it should not be construed as limiting, and the nonreactive conductive material may be embodied as any other material, such as non-noble metals, TiN, oxides, graphene, and alloys of two or more metals, without departing from the scope of the disclosure.

The inert conducting element 114 may be provided to increase the overall conductivity of the gas-sensing surface 112 and to reduce a magnitude of fluctuation/variation in the overall conductivity in the absence or presence of the test gases. This enables accurate detection of the integrity of the gas-sensing element 102 and thereby allows effective detection of whether the gas sensor 100 becomes operationally ineffective.

In one or more embodiments, the inert conducting element 114 may be adapted to maintain a predefined minimum conductivity of the gas-sensing element 102. In one or more embodiments, the term "predefined minimum conductivity" refers to a conductivity of the gas-sensing element 102 in the absence of the test gases. The predefined minimum conductivity may be tunable to a series resistance of the gas sensor 100 and in at least one of 1E-5 mS to 1E-3 mS, 1E-4 mS to 1E-2 mS, 1E-3 mS to 1E-1 mS ranges, and 1E-2 mS to 1 mS. In one or more embodiments, the predefined minimum conductivity may be tuned to the series resistance of the gas sensor 100 such that a sufficient current flow is maintained to the gas-sensing element 102 of the gas sensor 100.

The inert conducting element 114 may be adapted to maintain the predefined minimum conductivity of the gas-sensing element 102 based on a conductivity of the inert conducting element 114. The conductivity of the inert conducting element 114 may be higher in the presence of the test gas than in the absence of the test gas. The conductivity of the inert conducting element 114 may be a constant in the absence of the gas.

The inert conducting element 114 may be adapted to maintain the predefined minimum conductivity of the gas-sensing element 102 to evaluate an operational integrity of the gas-sensing surface 112 in at least one of absence and presence of the gas to be tested. As explained earlier, the conductivity of the inert conducting element 114 may remain constant in the absence of the gas and therefore, the predefined minimum conductivity of the gas-sensing element 102 may also remain constant in the absence of the gas. If a variation in the predefined minimum conductivity of the gas-sensing element 102 is measured in the absence of the gas, then it may be determined that the operational integrity of the gas-sensing surface 112 is compromised. For instance, if the conductivity of the gas-sensing surface 112 reduces below the predefined minimum conductivity, then it may be determined that the operational integrity of the gas-sensing surface 112 is compromised.

For example, the inert conducting element 114 may be disposed between the gas-sensing surface 112 and the base 110 in such a manner that when the gas-sensing surface 112 cracks and peels-off, then the inert conducting element 114 may also get damaged. This results in the variation in the conductivity of the inert conducting element 114 and thereby affecting the conductivity of the gas-sensing surface 112. Such variation in the conductivity indicates that the operational integrity of the gas-sensing element 102 is breached stemming from cracking and peeling-off the gas-sensing surface 112. Therefore, the implementation of the inert conducting element 114 substantially simplifies the testing of the operational integrity of the gas-sensing surface 112 of the gas-sensing element 102.

In one or more embodiments, the conductivity of the inert conducting element 114 may be varied based on a thickness `t' of material deposition of the inert conducting element 114. In one or more embodiments, the inert conducting element 114 may be deposited as a line of material, such as Gold (Au), having the thickness `t' between the gas-sensing surface 112 and the base 110. In another embodiment, the inert conducting element 114 may be deposited as a film of material, such as Gold (Au), having the thickness `t' between the gas-sensing surface 112 and the base 110. The conductivity of the inert conducting element 114 may be proportional to the thickness `t' of the material deposition of the inert conducting element 114. For instance, the conductivity of the inert conducting element 114 may be increased by increasing the thickness '1' of the material deposition of the inert conducting element 114 and thereby, increasing the predefined minimum conductivity of the gas-sensing element 102.

In one or more embodiments, the inert conducting element 114 may be embodied as a non-continuous film having an average thickness in a range of 0.1 nm to 9 nm. In another embodiment, the inert conducting element 114 may be embodied as a continuous film having an average thickness in a range of 5 nm to 15 nm. In yet another embodiment, the inert conducting element 114 may be embodied as a continuous film having an average thickness in a range of 20 nm to 50 nm.

Further, in one or more embodiments, the conductivity of the inert conducting element 114 may be varied based on a width 'w' of material deposition of the inert conducting element 114. The conductivity of the inert conducting element 114 may be proportional to the width 'w' of the material deposition of the inert conducting element 114. For instance, the conductivity of the inert conducting element 114 may be increased by increasing the width 'w' of the material deposition of the inert conducting element 114 and thereby, increasing the predefined minimum conductivity of the gas-sensing element 102.

In one or more embodiments, the inert conducting element 114 may be deposited as a line of material, such as Gold (Au), having the width 'w' between the gas-sensing surface 112 and the base 110. In another embodiment, the inert conducting element 114 may be deposited as a film of material, such as Gold (Au), having the width 'w' between the gas-sensing surface 112 and the base 110. In one or more embodiments, the film of the inert conducting element 114 may provide higher conductivity compared to the line of the inert conducting element 114.

In one example, the width of material deposition of the inert conducting element 114 may be in a range of 1-10 microns. In another example, the width of material deposition may be in a range of 20-50 microns. However, the aforesaid examples of width should not be construed as limiting, and the material can be deposited with different widths based on various factors, such as type of deposition techniques, operational parameters associated with deposition techniques, and a size of gas-sensing element 102 to be deployed in the gas sensor 100, without departing from the scope of the disclosure.

In one or more embodiments, the conductivity of the at least one inert conducting element 114 may be varied based on the conductivity and thickness of the base 110 underneath the at least one inert conducting element 114.

In one or more embodiments, the conductivity of the inert conducting element 114 may be varied based on an overlapping area between the material deposition of the inert conducting element 114, the base 110, and electrodes, such as the plurality of electrodes 106, of the gas sensor 100. The term "overlapping area" may refer to an area of at least a portion of the inert conducting element 114 which coincides with the plurality of electrodes 106 and the base 110 of the gas sensor 100. In one or more embodiments, the conductivity of the inert conducting element 114 may be increased by increasing the overlapping area between the inert conducting element 114, the base 110, and the plurality of electrodes 106.

Further, in one or more embodiments, the conductivity of the inert conducting element 114 may be varied based on a geometric pattern of material deposition of the inert conducting element 114. The term "geometric pattern" may refer to a geometric shape in which the material of the inert conducting element 114 is deposited between the gas-sensing surface 112 and the base 110. As explained earlier, the material may be deposited in the form of a line extending from one electrical contact to another electrical contact of the gas sensor 100. The line of the material, such as noble metals, may be deposited in a manner to define a specific geometric pattern to attain a desired conductivity of the inert conducting element 114. In one or more embodiments, a length of the line of the material deposited to define a specific geometric pattern may also result in a variation of the conductivity of the inert conducting element 114. For instance, if a length of the line of the material deposited to define a first geometric pattern is larger than a length of the line of the material deposited to define a second geometric pattern, then the conductivity of the first geometric pattern is higher than the conductivity of the second geometric pattern.

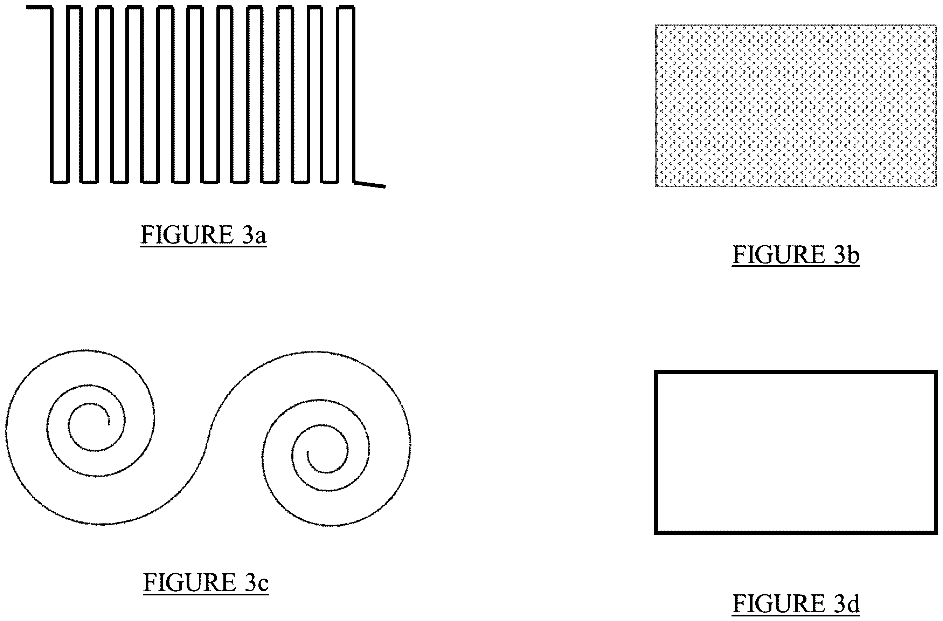

**Figures 3a-3d** illustrate different types of the inert conducting elements 114 of the gas-sensing element 102, according to various embodiments of the disclosure. Referring to Figure 3a, in one or more embodiments, the inert conducting element 114 may have a serpentine pattern. Referring to Figure 3b, in another embodiment, the inert conducting element 114 may have an island pattern. Referring to Figure 3c, in yet another embodiment, the inert conducting element 114 may have a double spiral pattern. In another embodiment, the inert conducting element 114 may have a planar geometric shape. In various examples, the planar geometric shape may include, but is not limited to, a rectangular shape, a circular shape, a square shape, a triangular shape, a polygonal shape, without departing from the scope of the disclosure. In the illustrated embodiment, referring to Figure 3d, the inert conducting element 114 may have a rectangular shape.

It should be understood by the skilled person that the geometric shapes of the inert conducting element 114 should not be construed as limited to the shapes explained in the disclosure, and the material of the inert conducting element 114 may be deposited in different shapes to attain a desired conductivity of the inert conducting element 114, without departing from the scope of the disclosure.

Further, the above-described gas-sensing element 102 can be incorporated into the gas sensor 100 as schematically depicted in Figure 1. As shown in Figure 1, the gas sensor 100 comprises the gas-sensing element 102 with the base 110, the gas-sensing surface 112, and the inert conducting element 114, integrated with either parallel or interdigitated electrodes, such as the plurality of electrodes 106. In the illustrated embodiment, the plurality of electrodes 106 may be depicted below the gas-sensing element 102, but can also be disposed over or above the gas-sensing element 102.

In one or more embodiments, the plurality of electrodes 106 may be connected to the gas-sensing element 102 and the electrical circuit 108. The electrical circuit 108 may be adapted to measure at least one of a voltage across the gas-sensing element 102, resistance, impedance, current, and conductance associated with the gas-sensing element 102 and the inert conducting element 114. In the illustrated embodiment, referring to Figure 1, the plurality of electrodes 106 may be connected externally to the gas-sensing element 102 by the electrical circuit 108 that includes a signal processor 116. The signal processor 116 may be a voltmeter or ampere meter, but in different embodiments comprises a potentiostatic circuit, voltage divider circuit, bridge circuit, microprocessor, electronic control unit (ECU), or similar electronic device with integrated voltage and or amperage measurement functions and may apply a voltage bias between the plurality of electrodes 106. Other gas sensor components including, but not limited to, housings, mounting hardware, gas flow conduits, fluid chambers are not shown in Figure 1, but can be incorporated into the gas sensor 100 by the skilled person.

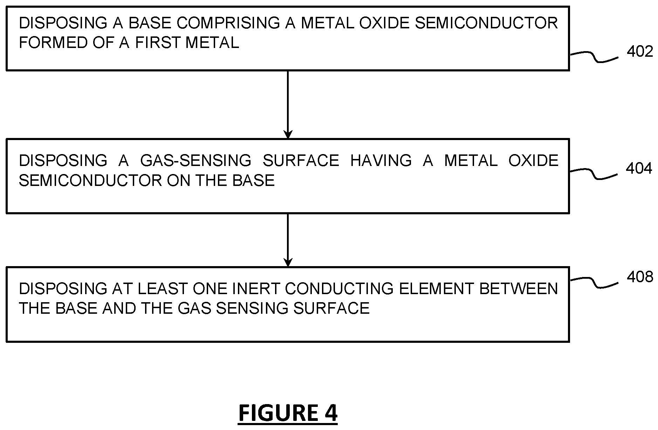

Figure 4 illustrates a flowchart depicting a method 400 of manufacturing the gas-sensing element 102, according to one or more embodiments of the disclosure. At step 402, the method 400 includes disposing the base 110 comprising the metal oxide semiconductor formed of the first metal. In one or more embodiments, the base 110 may be deposited on the substrate 104 of the gas sensor 100 by performing thermal deposition techniques, such as sputtering, physical vapor deposition, chemical vapor deposition, or thermal spray.

At step 404, the method 400 includes disposing the gas-sensing surface 112 having the metal oxide semiconductor on the base 110. The metal oxide semiconductor is formed of the first metal and at least one dopant having at least one of the second metal and at least one compound. In one or more embodiments, the gas-sensing surface 112 may be deposited on the base 110 of the gas sensor 100 by performing thermal deposition techniques, such as sputtering, physical vapor deposition, chemical vapor deposition, or thermal spray.

At step 404, the method 400 includes disposing the inert conducting element 114 between the base 110 and the gas-sensing surface 112. The inert conducting element 114 may be adapted to maintain the predefined minimum conductivity of the gas-sensing element 102. The inert conducting element 114 may be adapted to maintain the predefined minimum conductivity of the gas-sensing element 102 based on the conductivity of the inert conducting element 114. As explained earlier, the conductivity of the inert conducting element 114 may vary based on at least the thickness, the geometric pattern, the width, and the overlapping area of the material deposition of the inert conducting element 114 between the base 110 and the gas-sensing surface 112.

While the above steps of Figure 4 are shown and described in a particular sequence, the steps may occur in variations to the sequence in accordance with various embodiments of the disclosure. Further, the details related to various steps of Figure 4, which are already covered in the description related to Figures 1-3 are not discussed again in detail here for the sake of brevity.

As would be gathered, the disclosure offers the gas-sensing element 102 and the method 400 of manufacturing the gas-sensing element 102. As explained earlier, the inert conducting element 114 may maintain the predefined minimum conductivity of the gas-sensing element 102 to evaluate the operational integrity of the gas-sensing surface 112 of the gas-sensing element 102. The predefined minimum conductivity may be varied by varying the at least one of the thickness, the width, the geometric pattern, and the overlapping area of the material deposition of the inert conducting element 114. This substantially provides higher flexibility in designing the gas-sensing elements, such as 102, with different minimum conductivities for different applications and requirements.

Further, owing to the implementation of the inert conducting element 114, the integrity of the gas-sensing surface 112 may be tested efficiently and effectively even in the absence of the test gas. In particular, compared to the conventional gas-sensing elements, the gas-sensing element 102 with the inert conducting element 114 have a higher conductivity in the absence of the test gas and therefore, enable easier determination of whether the gas-sensing element 102 is operational.

Furthermore, owing to the implementation of the inert conducting element 114 to increase the conductivity, reactive sputtering can be used in oxygen-containing atmospheres to deposit metal oxides from readily available high-purity metal targets, as opposed to sputtering films from doped ceramic metal oxide targets. The metal targets tend to have better heat transfer capability and are easier and cheaper to obtain compared to the doped ceramic metal oxide targets. Therefore, the implementation of the inert conducting element 114 may eliminate the requirement of doped metal oxides to increase the conductivity. In the conventional gas-sensing elements, an amount of dopant might be controlled to vary the conductivity. However, the amount of dopant might be difficult to control. An exact amount of the dopant may vary from one sputter system to another, and it may even vary from one metal oxide sputter target to another. Therefore, the gas-sensing element 102 and the method 400 of the disclosure are efficient, durable, flexible in implementation, cost-effective, and convenient.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A gas-sensing element for a gas sensor, the gas-sensing element comprising:
a base comprising a metal oxide semiconductor formed of a first metal;
a gas-sensing surface disposed on the base, and comprising:
a metal oxide semiconductor formed of the first metal and at least one dopant having at least one of a second metal and at least one compound, and
at least one inert conducting element disposed between the base and the gas-sensing surface,
wherein the at least one inert conducting element is adapted to maintain a predefined minimum conductivity of the gas-sensing element.

2. The gas-sensing element according to claim 1, wherein the predefined minimum conductivity is tunable corresponding to a series resistance of the gas sensor and tunable in at least one of 1E-5 mS to 1E-3 mS, 1E-4 mS to 1E-2 mS, 1E-3 mS to 1E-1 mS and 1E-2 to 1mS ranges.

3. The gas-sensing element according to any of claims 1 or 2, wherein the at least one inert conducting element is adapted to maintain the predefined minimum conductivity of the gas-sensing element based on conductivity of the at least one inert conducting element, and wherein the conductivity of the at least one inert conducting element is varied based on at least one of:
a geometric pattern of material deposition of the at least one inert conducting element,
a thickness of material deposition of the at least one inert conducting element,
a width of material deposition of the at least one inert conducting element,
a thickness of the base underneath the at least one inert conducting element, and
an overlapping area between the material deposition of the at least one inert conducting element, the base, and electrodes of the gas sensor.

4. The gas-sensing element according to any of claims 1-3, wherein the conductivity of the at least one inert conducting element is higher in presence of the gas than in the absence of the gas, wherein the conductivity of the at least one inert conducting element is constant in the absence of gas.

5. The gas-sensing element according to any of claims 3 or 4, wherein the conductivity of the at least one inert conducting element is proportional to the thickness of material deposition of the at least one inert conducting element.

6. The gas-sensing element according to any of claims 3 or 5, wherein the at least one inert conducting element is embodied as a non-continuous film having an average thickness in a range of 0.1 nm to 9 nm.

7. The gas-sensing element according to any of claims 3 or 5, wherein the at least one inert conducting element is embodied as a continuous film having an average thickness in a range of 5 nm to 15 nm.

8. The gas-sensing element according to any of claims 3 or 5, wherein the at least one inert conducting element is embodied as a continuous film having an average thickness in a range of 20 nm to 50 nm.

9. The gas-sensing element according to any of claims 3 or 5, wherein the at least one inert conducting element has a serpentine pattern.

10. The gas-sensing element according to any of the preceding claims, wherein the at least one inert conducting element has an island pattern; and/or
wherein the at least one inert conducting element has a planar geometric shape; and/or
wherein the at least one inert conducting element has a double spiral pattern; and/or
wherein the at least one inert conducting element is formed of a nonreactive conductive material.

11. The gas-sensing element according to claim 1, wherein the first metal comprises aluminum, bismuth, cadmium, cerium, chromium, cobalt, copper, iron, gallium, indium, molybdenum, niobium, tantalum, tin, titanium, tungsten, vanadium, or zinc.

12. The gas-sensing element according to claim 1, wherein:
the first metal comprises aluminum, bismuth, cadmium, cerium, chromium, cobalt, copper, iron, gallium, indium, molybdenum, niobium, tantalum, tin, titanium, tungsten, vanadium, or zinc, and
the second metal comprises one or more group 5 to group 11 transition metals.

13. The gas-sensing element according to any of the preceding claims, wherein the at least one inert conducting element is adapted to maintain the predefined minimum conductivity of the gas-sensing element to evaluate an operational integrity of the gas-sensing surface in at least one of absence and presence of a gas to be tested; and/or
wherein the gas is embodied as one of hydrogen and hydrogen sulfide.

14. A gas sensor comprising:
a substrate;
a gas-sensing element disposed on the substrate and comprising:
a base comprising a metal oxide semiconductor formed of a first metal;
a gas-sensing surface disposed on the base and, comprising:
a metal oxide semiconductor formed of the first metal and at least one dopant having at least one of a second metal and at least one compound, and
at least one inert conducting element disposed between the base and the gas-sensing surface,
wherein the at least one inert conducting element is adapted to maintain a predefined minimum conductivity of the gas-sensing element, and
a plurality of electrodes connected to the gas-sensing element and an electrical circuit, wherein the electrical circuit is adapted to measure at least one of a voltage across the gas-sensing element, resistance, impedance, current, and conductance associated with the gas-sensing element and the at least one conducting element.

15. A method of manufacturing the gas-sensing element according to any of claims 1-13, the method comprising:
disposing a base comprising a metal oxide semiconductor formed of a first metal;
disposing a gas-sensing surface having a metal oxide semiconductor on the base, wherein the metal oxide semiconductor is formed of the first metal and at least one dopant having at least one of a second metal and at least one compound; and
disposing at least one inert conducting element between the base and the gas-sensing surface,
wherein the at least one inert conducting element is adapted to maintain a predefined minimum conductivity of the gas-sensing element.
